**Europäisches Patentamt**

**European Patent Office**

**Office européen des brevets**

(19)

(11) Veröffentlichungsnummer: **0 040 257**
**B1**

(12) # EUROPÄISCHE PATENTSCHRIFT

(45) Veröffentlichungstag der Patentschrift:
21.09.83

(21) Anmeldenummer: **80103143.6**

(22) Anmeldetag: **06.06.80**

(51) Int. Cl.³: **B 01 D 23/18**

(54) **Im Querschnitt dreieckiges Drainagerohr.**

(30) Priorität: **12.05.80 CH 3695/80**

(43) Veröffentlichungstag der Anmeldung:
**25.11.81 Patentblatt 81/47**

(45) Bekanntmachung des Hinweises auf die Patenterteilung:
**21.09.83 Patentblatt 83/38**

(84) Benannte Vertragsstaaten:
**AT DE FR GB IT NL**

(56) Entgegenhaltungen:
**DE-C-1 120 988**
**DE-U-1 874 481**
**DE-U-1 940 490**
**US-A-2 153 789**
**US-A-2 153 790**
**US-A-3 369 367**
**US-A-3 440 823**

(73) Patentinhaber: **GEBRÜDER SULZER AKTIENGESELLSCHAFT**, Zürcherstrasse 9, CH-8401 Winterthur (CH)

(72) Erfinder: **Tylmann, Josef, Brunngasse, CH-8400 Winterthur (CH)**

(74) Vertreter: **Dipl.-Ing. H. Marsch Dipl.-Ing. K. Sparing Dipl.-Phys.Dr. W.H. Röhl Patentanwälte, Rethelstrasse 123, D-4000 Düsseldorf (DE)**

# Im Querschnitt dreieckiges Drainagerohr

Die Erfindung betrifft ein im Querschnitt dreieckiges Drainagerohr für eine rückspülbare Drainagerohr-Filteranlage zur Wasseraufbereitung, welches mit einer Dreieckseite auf den Boden eines Filterbeckens abgestellt und von körniger Filtermasse umgeben werden soll.

In Filteranlagen für die Filtration von Flüssigkeiten, insbesondere von Wasser, sind Drainagerohre bekannt (DE-B-24 36 447, DE-A-28 52 316). Aufgabe der Drainagerohre ist einerseits, die durch die Filtermasse geleitete, gereinigte Flüssigkeit zu sammeln und aus der Anlage wegzuführen. Andererseits haben sie die zur Rückspülung der Filtermasse erforderlichen Spülmedien über die gesamte Filterfläche gleichmässig zu verteilen. Im allgemeinen sind die Drainagerohre in der körnigen Filtermasse oder einer grobkörnigeren Stützschicht für diese Filtermasse angeordnet.

Um Verluste an körniger Filtermasse bzw. Stützschichtmaterial zu verhindern, sind die Öffnungen für den Eintritt des Filtrats in die Drainagerohre bzw. den Austritt der Spülmedien kleiner als das Korn der Filtermasse oder der Stützschicht, in der die Rohre eingebettet sind. Es ist daher bekannt, Drainagerohre selbst mit einer Vielzahl einer Schlitze zu versehen (DE-B-24 36 447). Bei anderen bekannten Anlagen weisen die Drainagerohre Bohrungen auf, die mit geschlitzten Stützschalen oder Filterdüsen abgedeckt sind (DE-B-24 14 080; DE-A-28 52 316). Als eine Ausführungsform für mit Filterdüsen bestückte Drainagerohren sind auch bereits solche mit dreieckigem Querschnitt vorgeschlagen worden (EP-A1-0026789). Diese bekannten Möglichkeiten für die Herstellung der Strömungsverbindung zwischen der Filtermasse und den Drainagerohren sind relativ aufwendig und teuer.

Weil nicht gespülte, tote Zonen verkeimen können, ist es besonders in Filtern, die für die Trinkwasseraufbereitung eingesetzt werden, für die Rückspülung der Filtermasse wichtig, in den Drainagerohren die Öffnungen für den Austritt der Spülmedien so anzuordnen, dass die gesamte Filtermasse und gegebenenfalls deren Stützschicht wirksam gespült werden. Bei den erwähnten Konstruktionen ist das dazu primär notwendige Vordringen der Spülmedien in alle Bereiche der körnigen Massen nicht ohne weiteres gegeben; so treten bei der Konstruktion mit den geschlitzten Stützschalen ebenso Totzonen auf, wie bei mit Filterdüsen bestückten Drainagerohren mit Kreisquerschnitt in der Nähe der Auflage auf dem Filterboden. Weiterhin kann bei kreisförmigen Drainagerohren mit seitlich gerichteten Austrittsöffnungen auch die Scheitelzone nicht im Strömungsbereich der Spülmedien liegen.

Die Bildung nicht gespülter Totzonen, die hinter Flanschen an den Austrittsöffnungen der Rohre entstehen, macht ein weiteres bekanntes dreieckiges Drainagerohr (US-A-2 151 789) für eine Verwendung in Filteranalgen der genannten Art ungeeignet. Ebenso kann mit der einen dreieckigen Querschnitt und einen Längsschlitz aufweisenden Konstruktion nach der US-A-3 369 367 eine gleichmässige Verteilung der Rückspülmedien in der körnigen Filtermasse nicht sichergestellt werden, weil diese Medien völlig unkontrolliert aus den Rohren austreten, wenn die Rohre infolge des vorhandenen Überdrucks von ihrem Kiesbett abheben.

Aufgabe der vorliegenden Erfindung ist es, Drainagerohre für Filteranlagen zu schaffen, die fertigungstechnisch einfacher herzustellen sind als die bisherigen, für solche Anlagen verwendeten Drainagerohre und darüberhinaus mit Sicherheit ein Durchströmen der gesamten Filtermasse und/oder deren Stützschicht gewährleisten.

Erfindungsgemäss wird diese Aufgabe dadurch gelöst, dass die dem Boden zugewandte Mantelfläche des dreieckigen mit abgerundeten Kanten versehenen Drainagerohres mit mindestens einem Längsschlitz versehen ist, der mit einer in regelmässiger Folge stufenförmige Stege und Nuten aufweisenden Leiste abgedeckt ist, wobei die die Strömungsverbindung zwichen dem Drainagerohr und der körnigen Filtermasse bildenden Nuten innerhalb der dem Boden zugewandten Mantelfläche enden.

Da das neue Drainagerohr nicht mehr mit einzelnen Öffnungen versehen werden muss, die unter Umständen darüberhinaus mit Filterdüsen zu bestücken sind, sondern auf einfache Weise, beispielsweise durch dreimaliges Abkanten eines bandartigen Streifens hergestellt werden kann, ist die Fertigung erheblich vereinfacht; denn auch die Befestigung der stufenförmigen Leiste entlang des durch das Abkanten entstandenen Schlitzes bereitet keine Schwierigkeiten. Die Leiste kann dabei mit der den Schlitz enthaltenden Dreiecksfläche beispielsweise durch einfaches Punktschweissen oder Ankleben verbunden werden. Bei dem Abkanten zu einem Dreieck entstehen darüberhinaus Abrundungen, durch die die Gefahr des Abreissens der Strömung des aus dem Rohr austretenden Rückspülmediums vermindert wird und stattdessen eine Umlenkung und Führung der Rückspülungsströmung erfolgt.

Weiterhin hat sich für die Verteilung der Spülmedien, ohne dass in den körnigen Massen Toträume entstehen, ein Austritt der Spülmedien in horizontaler Richtung möglichst kurz über dem Filterboden als am günstigsten erwiesen; bei dem erfindungsgemässen Dreinagerohr ergibt sich nicht nur diese geforderte Art des Ausströmens der Spülmedien aus dem Drainagerohr am Boden, sondern darüberhinaus noch eine Führung der Strömung entlang des Bodens ehe sie – am Ende der dem Boden zugewandten Dreiecksfläche – in aufsteigende Richtung umgelenkt wird, ohne dass in dem das Rohr umgebenden körnigen Filtermedium nicht durch das Rückspülmedium erfasste Toträume entstehen.

Die Verteilung der Spülmedien lässt sich weiter verbessern, wenn die Nuten der Leiste sich von der Mittellinie der Leiste nach beiden Seiten erweitern und/oder wenn der Boden der Nuten von der Mittellinie nach aussen abfällt.

Für den Abfluss des Filtrats aus den Drainagerohren und gleichzeitig für die Zufuhr der Spülmedien kann in bekannter Weise unter dem Boden des Filterbeckens ein Sammelkanal angeordnet sein, der in der Mitte des Filterbeckens über dessen ganze Länge quer zu den Drainagerohren verläuft; mit Vorteil werden die einzelnen Drainagerohre gemäss der vorliegenden Erfindung an diesen Sammelkanal durch eine in der – dem Boden des Filterbeckens zugewandten – Mantelfläche vorgesehene Öffnung angeschlossen, die gegenüber der axialen Mitte des Drainagerohres versetzt sein kann. Diese Massnahme bringt den Vorteil, dass auch in der Umgebung der Öffnung, wie noch beschrieben wird, die Entstehung von schwach gespülten Toträumen vermindert wird.

Im folgenden wird die Erfindung mit Hilfe von Ausführungsbeispielen im Zusammenhang mit der Zeichnung näher erläutert.

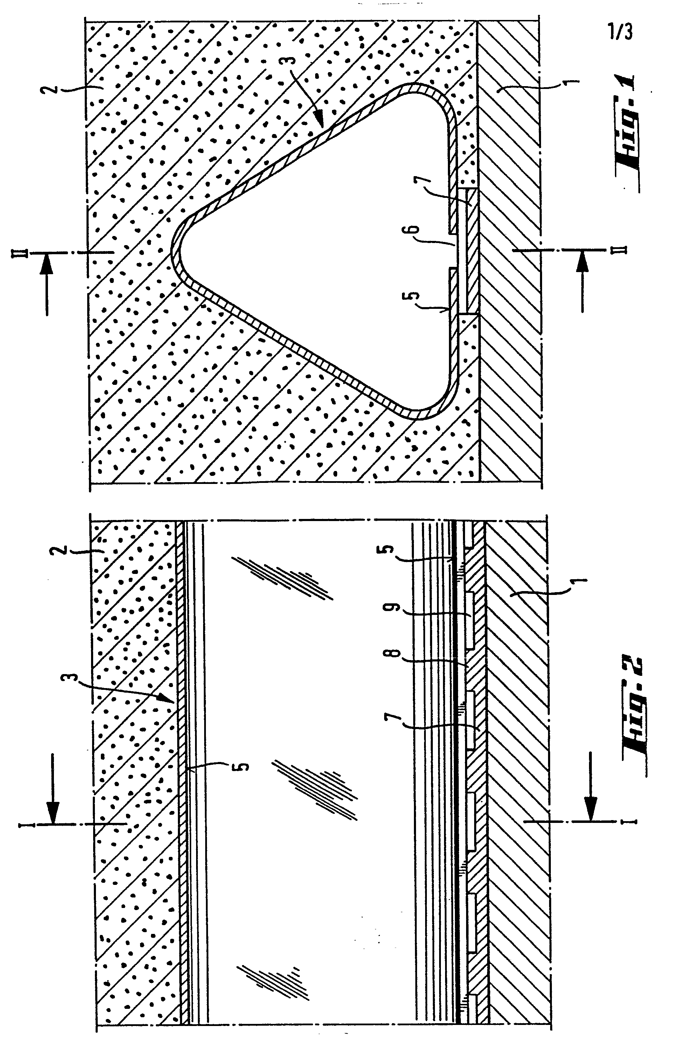

Fig. 1 zeigt – in einem Ausschnitt aus einem Filterbecken und einem Schnitt I-I von Fig. 2 – einen Querschnitt durch die Filtermasse senkrecht zur Achse eines Drainagerohres;

Fig. 2 ist ein Schnitt II-II von Fig. 1;

Fig. 3 und 4 geben in schematischer und räumlicher Darstellung zwei verschiedene Ausführungsformen für die Stege und Nuten aufweisende Leiste wieder.

Fig. 5 ist ein Schnitt V-V von Fig. 6 und zeigt einen Querschnitt durch ein Filterbecken, der parallel zur Längsachse der Drainagerohre verläuft.

Fig. 6 schliesslich stellt den Schnitt VI-VI von Fig. 5 dar.

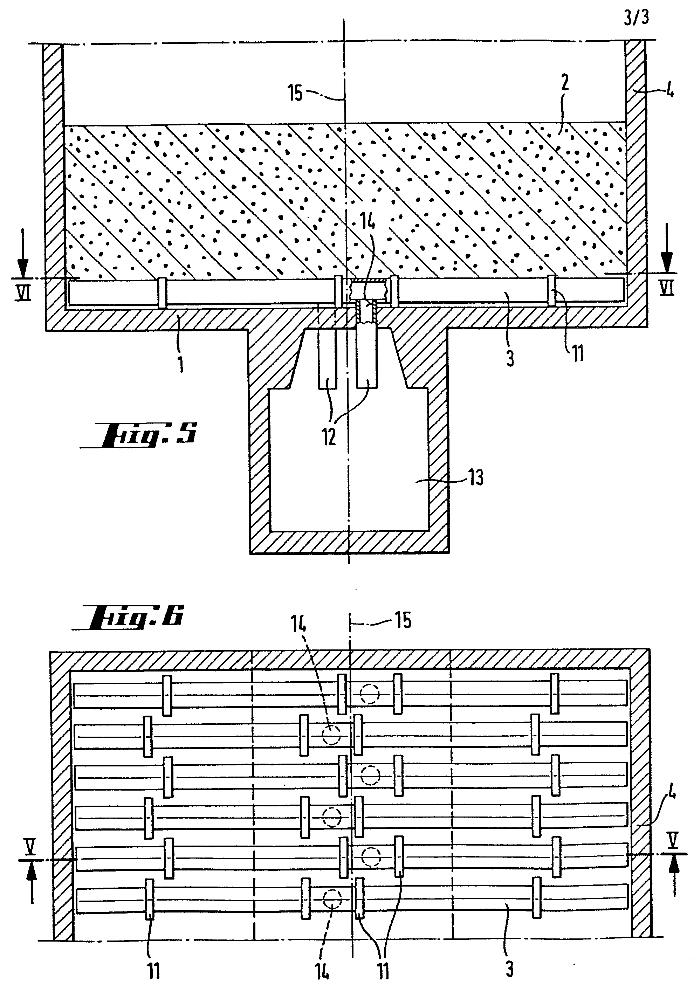

Ein erfindungsgemäss ausgebildetes, im Querschnitt dreieckiges Drainagerohr 3 ist auf dem Boden 1 eines Filterbeckens 4 (Fig. 5) mit einer seiner Mantelflächen 5 abgestellt und beispielsweise durch im Boden 1 verankerte Briden oder Rohrschellen 11 (Fig. 5) fixiert. Das Rohr 3 ist eingebettet in eine Filtermasse 2; erfindungsgemäss hat das Drainagerohr 3 in Längsrichtung in der Mitte der dem Boden 1 zugewandten Mantelfläche 5 einen Schlitz 6. Dieser ist von aussen durch eine Leiste 7 abgedeckt, die an der Mantelfläche 5 von aussen angeheftet, beispielsweise angeklebt oder angeschweisst, ist.

Nach Art einer Zahnstange weist die Leiste 7 alternierend Stege 8 und Nuten 9 auf, wobei die Stege 8 an der Mantelfläche 5 anliegen. Die Nuten 9 bilden zusammen mit dem Schlitz 6 eine Strömungsverbindung für das Filtrat bzw. die Rückspülmedien in das Draingerohr 3 hinein bzw. aus ihm heraus.

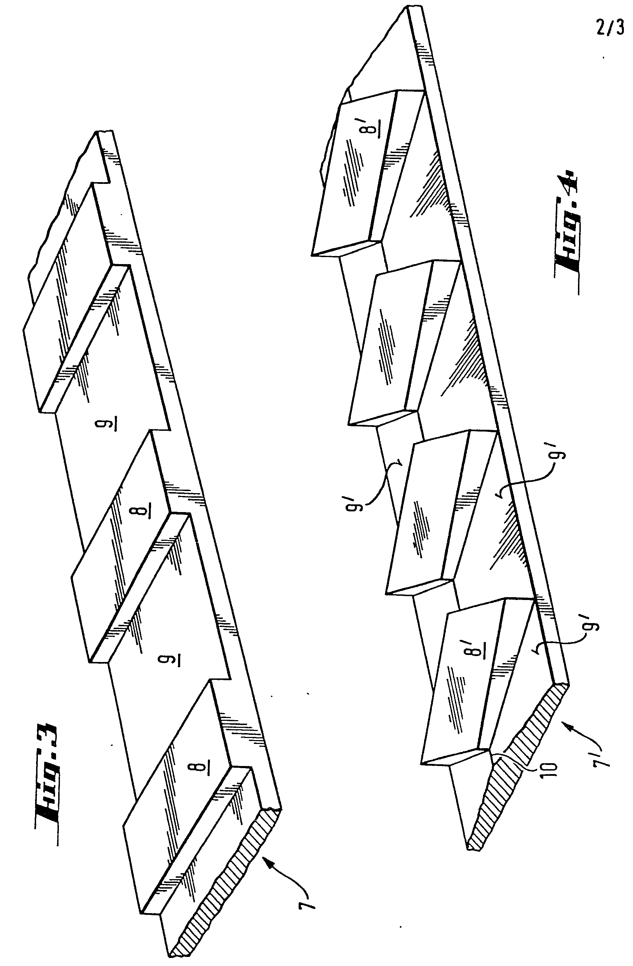

Bei der Leiste 7 gemäss der ersten Ausführungsform, die in Fig. 3 vergrössert dargestellt ist, verlaufen die seitlichen Begrenzungen der Stege 8 bzw. der Boden der Nuten 9 senkrecht zur Längsachse der Leiste bzw. parallel zur Mantelfläche 5.

Für eine weitergehende Verbesserung der Verteilung der Spülmedien bzw. eine Verminderung der schwach gespülten Bereiche im Schatten der Kanten der Leiste 7 sind bei der Leiste 7′ (Fig. 4) die Stege 8′ rhombenförmig ausgebildet, so dass die Nuten 9′ sich von der Mittellinie 10 aus nach beiden Seiten konisch erweitern; zusätzlich dazu ist dann auch der Boden der Nuten 9′ von der Mittellinie 10′ aus nach aussen schräg abfallend ausgebildet. Auf diese Weise werden die nicht von der direkten Strömung, sondern nur von entstehenden Wirbeln erfassten Zonen unmittelbar hinter den Seiten- bzw. Unterkanten der Stege 8′ bzw. Nuten 9′ gegenüber der ersten Ausführungsform der Leiste 7 verringert.

Die Tiefe der Nuten 9 bzw. 9′ ist auf die Körnung der die Drainagerohre im Filterbecken umgebenden Filtermasse 2 so abgestimmt, dass keine Körner in die Drainagerohre 3 gelangen können. Die Filtermasse 2 kann sowohl aus einem Material einheitlicher Körnung als auch, was nicht ausdrücklich gezeigt ist, unter Umständen aus einem relativ feinkörnigen Material, dem eigentlichen Filtermaterial, und aus einer grobkörnigeren Stützschicht bestehen, in die die Drainagerohre 3 eingebettet sind.

Wie Fig. 6 erkennen lässt, erfolgt der Einsatz der neuen Drainagerohre 3 in einem Filterbecken 4 zweckmässigerweise so, dass eine Anzahl parallel zueinander verlaufender Drainagerohre 3 den Boden 1 so eng wie möglich überdecken. Für das Wegführen des Filtrats während des Filterbetriebs und zur Zuführung der Spülmedien während des Rückspülens sind die Drainagerohre mit Öffnungen 14 versehen, an die Tauchrohre 12 angeschlossen sind. Diese führen durch den Boden 1 des Filterbeckens 4 hindurch in einen Sammelkanal 13. Der Sammelkanal 13 ist unter der Mitte der parallel zu den Drainagerohren 3 verlaufenden Abmessung des Filterbeckens 4 angeordnet.

Der Anschluss der Tauchrohre 12 an die Drainagerohre 3 stellt an sich eine Störung für die angestrebte, möglichst ungestörte und gleichmässige Verteilung der Spülmedien dar. Die Auswirkungen dieser Störung werden bei der gezeigten Anordnung dadurch vermindert, dass die Tauchrohre 12 nicht in die Mitte der Längsabmessung der Drainagerohre 3 einmünden, sondern versetzt dazu. Denn wenn – wie in Fig. 5 und 6 gezeigt – im Boden 1 die Durchstecköffnungen für die Tauchrohre 12 abwechselnd links und rechts von der Mittelebene 15 des Filterbeckens 4 vorgesehen werden, so können die Tauchrohre 12 ebenfalls abwechselnd links und rechts von dieser Mittelebene 15 angeordnet sein, wie Fig. 6 zeigt; so vermeidet man, dass entlang des Sammelkanals 13 ein durchgehender Streifen mit einer gestörten Verteilung der Spülmedien auf den Boden 1 des Filterbeckens 4 entsteht. Das Gleiche wird für die, wenn auch geringeren, Störungen der Spülmedienverteilung durch die Rohrschellen 11 durch einen unterschiedlichen Abstand dieser von dem einen und von dem anderen Ende eines Drainagerohres 3 erreicht.

Wie bereits erwähnt, besteht eine einfache Art der Herstellung für die neuen Drainagerohre 3 darin, einen Streifen aus geeignetem Material, z.B. Blech oder Kunststoff, durch dreimaliges Abkanten zu einem dreieckigen an den Ecken abgerundeten Mantel zu verformen, wobei zwischen den dann einander zugewandten Enden des Streifens der Schlitz 6 von selbst entsteht. Dieser wird dann durch Anpunkten oder Ankleben einer stufenförmigen Leiste 7 bzw. 7' verschlossen.

## Patentansprüche

1. Im Querschnitt dreieckiges Drainagerohr für eine rückspülbare Drainagerohr-Filteranlage zur Wasseraufbereitung, welches mit einer Dreieckseite auf den Boden eines Filterbeckens abgestellt und von körniger Filtermasse umgeben werden soll, dadurch gekennzeichnet, dass die dem Boden (1) zugewandte Mantelfläche (5) des dreieckigen, mit abgerundeten Kanten versehenen Drainagerohres (3) mit mindestens einem Längsschlitz (6) versehen ist, der mit einer in regelmässiger Folge stufenförmige Stege (8, 8') und Nuten (9, 9') aufweisenden Leiste (7, 7') abgedeckt ist, wobei die die Strömungsverbindung zwischen dem Drainagerohr (3) und der körnigen Filtermasse (2) bildenden Nuten (9, 9') innerhalb der dem Boden (1) zugewandten Mantelfläche (5) enden.

2. Drainagerohr nach Anspruch 1, dadurch gekennzeichnet, dass die Nuten (9') der Leiste (7') sich von der Mittellinie (10) der Leiste (7') nach beiden Seiten erweitern.

3. Drainagerohr nach Anspruch 1 oder 2, dadurch gekennzeichnet, dass der Boden der Nuten (9') von der Mittellinie (10) nach aussen abfällt.

4. Drainagerohr nach Anspruch 1, dadurch gekennzeichnet, dass in der dem Boden (1) zugewandten Mantelfläche (5) des dreieckigen Drainagerohres (3) eine Öffnung zu einem unter dem Boden (1) des Filterbeckens (4) mittig angeordneten Sammelkanal (13) für das Filtrat vorgesehen ist, die gegenüber der axialen Mitte des Drainagerohres (3) versetzt angeordnet ist.

## Revendications

1. Tube de drainage triangulaire en section transversale, destiné à une installation de filtration lavable à contre-courant de tubes de drainage pour le traitement d'eau, le tube devant être placé d'un côté triangulaire sur le fond d'un bassin de filtration et entouré d'une masse granulaire de filtration, caractérisé en ce que la surface enveloppe (5) tournée vers le fond (1) du tube de drainage (3) triangulaire muni d'arêtes arrondies comporte au moins une fente longitudinale (6) qui est recouverte par une plaque (7, 7') présentant en une séquence régulière des nervures (8, 8') et des rainures (9, 9') en gradins, les rainures (9, 9') formant la liaison d'écoulement entre le tube de drainage (3) et la masse granulaire de filtration (2) se terminant à l'intérieur de la surface enveloppe (5) tournée vers le fond (1).

2. Tube de drainage selon la revendication 1, caractérisé en ce que les rainures (9') de la plaque (7') s'élargissent vers les deux côtés à partir de la ligne centrale (10) de la plaque (7').

3. Tube de drainage selon la revendication 1 ou la revendication 2, caractérisé en ce que le fond des rainures (9') descend vers l'extérieur à partir de la ligne médiane (10).

4. Tube de drainage selon la revendication 1, caractérisé en ce que dans la surface enveloppe (5) tournée vers le fond (1) du tube de drainage triangulaire (3) on prévoit un orifice vers un canal collecteur (13) destiné au filtrat, disposé au centre sous le fond (1) du bassin de filtration (4) et qui se trouve décalé par rapport au centre axial du tube de drainage (3).

## Claims

1. Triangular cross-section drainage tube for a backwashing drainage tube filter plant for water conditioning, the tube being adapted to be laid by way of one side of the triangle on the bottom of a filter basin and to be surrounded by a granular filter composition, characterised in that that side surface (5) of the triangular drainage tube (3), the same having rounded edges, which is near the bottom (1) of the filter basin is formed with at least one longitudinal slot (6) which is covered by a strip (7, 7') formed in a regular sequence with step-like lands (8, 8') and grooves (9, 9'), the grooves (9, 9') serving for flow communication between the drainage tube (3) and the granular filter composition (2) and terminating inside the tube surface (5) which is near the bottom (1).

2. A tube according to claim 1, characterised in that the grooves (9') in the strip (7') widen to both sides from the centre-line (10) of the strip (7').

3. A tube according to claim 1 or 2, characterised in that the base of the grooves (9') inclines downwardly and outwardly from the centre line (10).

4. A tube according to claim 1, characterised in that the tube outside surface (5) near the bottom (1) is formed with an orifice communicating with a filtrate collecting duct (13) disposed centrally below the filter base bottom (4), the orifice being offset from the axial centre of the tube (3).

Fig.2

Fig.1

0 040 257

1/3

Fig.3

Fig.4

*Fig. 5*

*Fig. 6*